# EUROPEAN PATENT SPECIFICATION

(11) **EP 0 630 201 B1**
(45) Date of publication and mention of the grant of the patent: **28.05.1997**
(21) Application number: 94904246.9
(22) Date of filing: 12.01.1994
(51) Int. Cl.: A47J 43/046, A47J 43/08

(54) **FOOD PROCESSOR**
KÜCHENMASCHINE
ROBOT DE CUISINE

(30) Priority: 13.01.1993 GB 9300577
(43) Date of publication of application: 28.12.1994
(73) Proprietor: Kenwood Marks Limited, Havant, Hampshire PO9 2NH (GB)
(72) Inventor: NICHOLSON, Martin John, Portsmouth, Hampshire PO7 8RD (GB)
(74) Representative: Marsh, Robin Geoffrey
(86) International application number: GB9400062
(87) International publication number: WO9415510

(56) References cited:
- EP-A- 0 270 851
- WO-A-86/05658
- WO-A-92/02168
- CH-A- 554 139
- DE-A- 3 540 370
- DE-U- 8 903 247
- DE-U- 8 912 794

## Description

This invention relates to a food processor and in particular to a food processor having a removable container with a lockable lid in which food can be prepared by, for example, chopping, slicing, blending, liquidising, grating, or shredding.

A conventional food processor comprises a body, which contains a motor and drive gear mechanism and upon which user-operable controls are mounted. The body has an upstanding drive-shaft over which the container for retaining food to be processed and a food processing tool are mounted. The container is closed by a lid which interacts with a safety interlock in the processor body, thereby preventing the processor from being operated without the lid being secured on the container.

In order to secure both the container to the body and the lid to the container, interlocking lugs and recesses are formed on the body and around the container base and around both the rim of the container and of the lid. Thus, when assembling the processor for use, it is necessary to ensure that all of the small lugs and recesses are interlocked which can be troublesome and time-consuming. Additionally, hygiene problems can arise due to the lugs and recesses forming dirt traps which are difficult to clean. Furthermore, the provision of such lugs and recesses during manufacture of the processor requires complex tooling and constrains the use of different size containers and materials from which the containers are made.

CH-A-554139 discloses a mixer and dispenser of cold drinks or ice-cream comprising a container mounted on a body and having a lid. An upstanding rotatable drive shaft extends upwardly through the container and engages with a locking bar of a lock to secure the lid on the container.

WO-A-8605658 discloses a kneading apparatus including a vat rotatable about a pivot on a frame, the vat having a pivotable cover containing a drive reduction unit and a drive output to which a beating tool can be attached.

DE-U-8912794 discloses a food processor having ribs on the lid which engage with stop ribs on the container to secure the lid on the container. Projections on the container base engage in recesses of the housing on which the container is mounted. A conventional lid interlock and switch, with which a part of the lid engages, is mounted on a tower beside the container.

It is therefore an object of the present invention to provide an improved food processor which substantially alleviates the aforementioned problems associated with known food processors.

According to the present invention, there is provided a food processor comprising a food processing container mounted on the body of the food processor, a lid for the container, and means for securing the lid on the container, said lid securing means comprising an upstanding member provided on said body and over which said container is mounted such that said upstanding member extends upwardly through said container, characterised in that said container is removably mounted on said body; in that said upstanding member comprises a fixed shaft around which is disposed a rotatable drive shaft for rotatably driving a food processing tool within the container; and in that said fixed shaft engages with an underside portion of said lid when said lid is positioned on said container so as both to secure the lid on the container and to secure the container on said body.

In one embodiment, the lid is provided with a central boss depending from its underside, the boss being arranged to engage with an upper end of the upstanding member so as to secure the lid and thus the container.

The container preferably has a tubular aperture extending from its base into its interior, which aperture is disposed over the upstanding member when the container is mounted on the body.

Two or more concentric drive shafts may be provided each for rotating a food processing tool mounted thereon at a different speed.

Preferably, a safety interlock is provided which prevents operation of the food processor without said engagement of the lid with the upstanding member. In one embodiment, the upstanding member is substantially hollow and the safety interlock comprises a switch mechanism located within the upstanding member, the switch mechanism being activated by the action of fitting the lid to the upstanding member.

The processor may include a stop member for inhibiting rotation of the container relative to the body and the lid. The processor may also be provided with an additional safety interlock to ensure that it cannot be operated without the container as well as the lid being in position on the body.

Due to the fact that no complex tooling of lugs and recesses is necessary, the container may be made of stainless steel or any other desirable material. Furthermore, the user-operable controls for the food processor may be mounted on the processor body and/or the lid and/or the container, as preferred.

The invention will now be described by way of examples with reference to the accompanying drawings, in which:-
Fig. 1 is a cross-section of part of a food processor according to a first embodiment of the invention,
Fig. 2 is a cross-section of part of a food processor according to a second embodiment of the invention, and
Fig. 3 is a cross-section of the shafts and lid locking mechanism of a third embodiment of the invention.

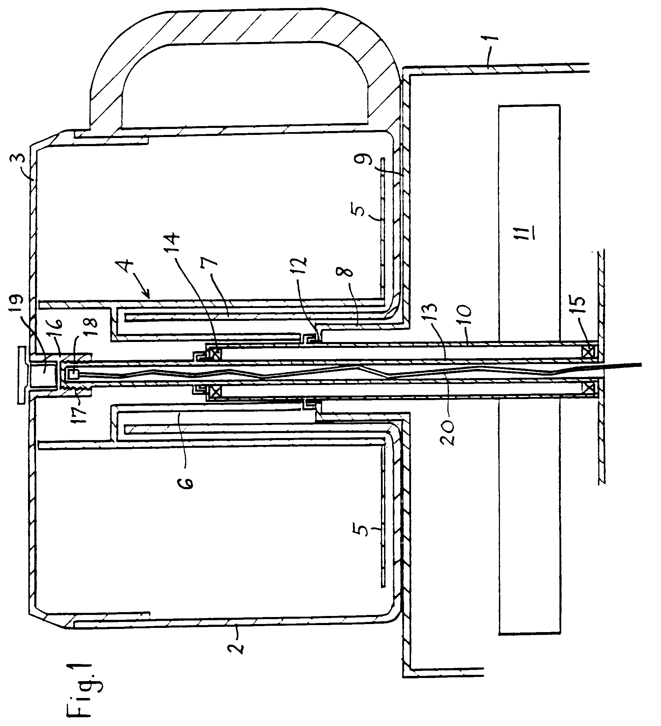

Referring firstly to Fig. 1, the food processor comprises a body 1, a removable food processing container 2 and a removable lid 3. Mounted within the container 2 is a removable food processing tool 4, which as shown is a rotatable cutter having blades 5 extending horizontally from the lowest edge of the cutter 4 and a downward projecting skirt 6. The container 2 includes a tubular aperture 7 rising up from the centre of the base of the container 2, the upper end of the tubular aperture 7 being open to receive the skirt 6 of the cutter 4.

The body 1 of the food processor includes a projection 8 which is upstanding from a face 9 of the body 1 and over which the tubular aperture 7 of the container is disposed when the container is positioned on the face 9.

Protruding up through an aperture 12 in the projection 8 is a rotatable drive shaft 10 which is rotatably driven by a motor-driven gearing mechanism 11 located in the body 1. The upper end of the drive shaft 10 is splined or formed with a number of flat sides which cooperate with corresponding mating features on the skirt 6 of the tool 4 so that rotation of the drive shaft 10 causes rotation of the tool within the container.

Within, and concentric with, the drive shaft 10 is a hollow central shaft 13, which is fixed to the base of the food processor and extends up through the body 1 to a level substantially commensurate with the upper edge of the container 2. Bearings 14,15 are provided at the upper and lower ends respectively of the drive shaft 10 so that it can be rotated relative to the fixed central shaft 13.

A central boss 16 depends from the underside of the lid and has a threaded recess 17 in its lower part. When the lid is positioned over the container, the threaded recess is fitted over the upper part of the fixed shaft 13 which is also threaded, so that rotation of the lid 3 by one quarter-turn relative to the container secures the lid 3 to the centre shaft 13. The lid 3 is thus fixed to the body 1 and the container 2 is in effect sandwiched between the lid 3 and the face 9 of the body 1.

The fixed shaft 13 and lid 3 contain a safety interlock in the form of a reed switch 18 located in the upper end of the shaft and a magnet 19 located above the threaded recess in the boss 16. The reed switch 18 is connected to control circuitry in the body 1 via a loom 20 which extends down through the fixed shaft 13. Without the lid in position on the container, the reed switch 18 prevents operation of the processor, and thus rotation of the tool 4.

In order to assemble the processor parts for use, the container 2 can be simply dropped on to the body 1, a tool 4 can be splined with the drive shaft, and the lid placed on the container and turned so as to secure it in place with the container sandwiched therebetween. Once the lid 3 is secured to the centre shaft 13, the magnet 19 activates the reed switch 18 so as to enable the processor to be operated. Subsequent removal of the lid remakes the safety interlock and the food processor is stopped.

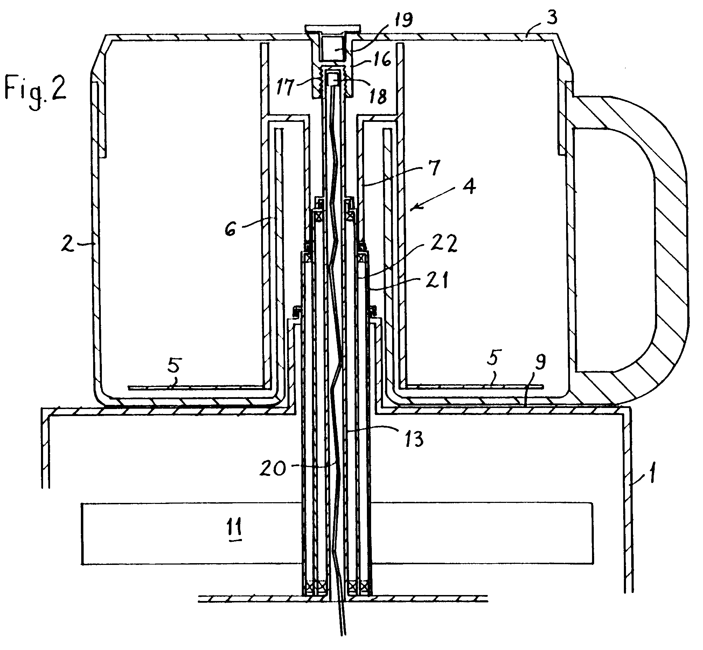

Fig. 2 shows an alternative embodiment of the invention, wherein like parts are labelled with like reference numerals with respect to Fig. 1. In this embodiment, the arrangement is the same as shown in Fig. 1 except that a two-speed drive mechanism comprising two concentric rotatable drive shafts 21,22 which rotate at different speeds is provided, instead of the single drive shaft 10. Each tool to be used in the processor can thus be designed to spline with one or the other of the drive shafts depending on the rotational speed required for the particular tool.

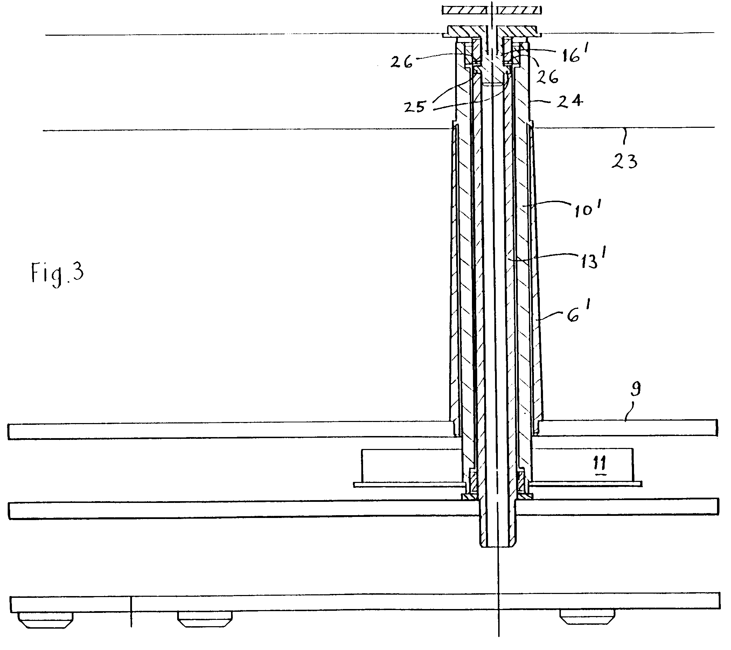

Fig. 3 shows a shaft and interlocking lid arrangement of yet another embodiment of the invention, in which like parts are again labelled with like reference numerals with respect to the embodiment shown in Fig. 1. In this embodiment, frusto-conical projection 6' corresponds to the projection 6 of the first embodiment but has been elongated to a level 23 which corresponds to the top of the tubular aperture 7 of the container (not shown in Fig.3). Additionally, the drive shaft 10' is arranged to extend above the tubular aperture of the container so that the tool (also not shown) splines with upper part 24 of the drive shaft 10'. Fig. 3 also shows an alternative means for securing the lid to the fixed central shaft 13'. In this arrangement, the boss 16' is shaped to fit inside the open upper end of the shaft 13' and is provided with protruding pins 25 which engage in shaped slots 26 in the shaft 13' as the lid is turned relative to the container, thereby forming a bayonet-type fixing.

In any of the described embodiments, a further safety interlock (not shown), in addition to the safety interlock in the lid, may be incorporated into the body 1 or the lid 3 to ensure that the container 2 is present before the food processor can be started, thereby preventing a user from operating the processor with the lid on but with no bowl, and hence preventing direct access to the driven processor tool. Additionally or alternatively, co-operable stop members may be provided on the container 2 and the body 1 to ensure that the container does not rotate relative to the lid and body during operation of the processor.

The present invention thus affords many advantages not provided by known processors.

For example, the procedure for assembling the processor parts for use is substantially simplified. Additionally, the simplified shapes of the container and the lid reduce problems associated with dirt traps and so the food processor is easier to clean, and tooling for the food processor can be simpler and cheaper. Moreover, instead of making the container from plastics material, the simpler design enables it to be made from stainless steel or other metal, which is more practical and cheaper and which enables it to be used as a saucepan, either on a conventional cooker or with a heating element provided as part of the food processor, such as in the base of the container. The present invention also enables many dew designs of food processor to be made. For example, controls for the food processor need not be mounted on the body as is conventional, but may be mounted on the container or the lid, and different size containers may be used. Additionally, the bowl and body tolerances can be reduced.

It will be appreciated that variations to the embodiments described are possible without departing from the scope of the invention.

For example, apart from the reed switch and magnet arrangement shown in Fig. 1, which may have single or multiple magnet poles, any alternative safety interlock, particularly involving the cooperation of an element of the lid and an element of the fixed shaft, may be utilised. These alternative means include other proximity switches, a mechanical plunger, mechanical rotation of a rotary switch, multiple magnet poles, a Hall effect device, a device employing sound waves or an infra-red beam, a micro switch and pin, and a make or break light beam.

The lid can be fixed to the shaft by any suitable means which, apart from the screw-thread and pin-and-slot type fixings shown in the illustrated embodiments, may include fixings of the type utilising for instance a clip feature, push-and-turn, magnetic attraction, suction, friction, gravity or interference fit.

If the processor controls are mounted on the lid or container, various means may be utilised to transfer control information from the lid or container to the body. These include rotating a mechanical knob on the lid or container to operate a rotary switch in the body, the knob and switch being connected by a rod extending through the fixed shaft. Another arrangement comprises vertically moving a mechanical knob on the lid or container to operate a linear movement switch on the body, the knob and switch being connected by a mechanical linkage in the fixed shaft. Further means of transferring control information from either the lid or the container to the body may include the use of an infra-red beam, sound waves, radio waves, a coil and Hall effect sensor, or mechanical/electrical contacts.

The power required to operate any electrical devices in the lid or the container can be provided, for example, by mechanical/electrical contacts between the lid and the body or between the container and the body, by a battery mounted in the lid or the container, or by a transformer the halves of which could be located in respective components of the food processor such as the lid, the bowl, the central shaft or the food processor body. In practice, the components of the battery or transformer could be located in any part of the food processor as long as the components are capable of interaction.

## Claims

1. A food processor comprising a food processing container (2) mounted on the body (1) of the food processor, a lid (3) for the container (2), and means (13) for securing the lid (3) on the container (2), said lid securing means (13) comprising an upstanding member (13) provided on said body (1) and over which said container (2) is mounted such that said upstanding member (13) extends upwardly through said container (2), characterised in that said container (2) is removably mounted on said body (1); in that said upstanding member (13) comprises a fixed shaft (13) around which is disposed a rotatable drive shaft (1) for rotatably driving a food processing tool (4) within the container; and in that said fixed shaft (13) engages with an underside portion (16) of said lid (3) when said lid (3) is positioned on said container (2) so as both to secure the lid (3) on the container (2) and to secure the container (2) on said body (1).

2. A food processor as claimed in claim 1, wherein the lid (3) is provided with a central boss (16) depending from its underside, said boss (16) being arranged to engage with an upper end of said upstanding member (13) so as to secure the lid (3) and thus the container (2).

3. A food processor as claimed in claim 1 or 2, wherein the container (2) has a tubular aperture (7) extending from its base into its interior, which aperture (7) is disposed over the upstanding member (13) when the container (2) is mounted on said body (1).

4. A food processor as claimed in claim 1, 2 or 3, wherein two or more concentric drive shafts (21,22) are provided each for rotating a food processing tool (4) mounted thereon at a different speed.

5. A food processor as claimed in any preceding claim, wherein a safety interlock (18,19) is provided which prevents operation of the food processor without said engagement of the lid (3) with the upstanding member (13).

6. A food processor as claimed in claim 5, wherein the upstanding member (13) is substantially hollow and the safety interlock (18,19) comprises a switch mechanism (18) located within the upstanding member (13), the switch mechanism (18) being activated by the action of engaging the lid (3) with the upstanding member (13).

7. A food processor as claimed in any preceding claim, including a stop member for inhibiting rotation of the container (2) relative to the body (1) and the lid (3).

8. A food processor as claimed in any preceding claim, including an additional safety interlock to ensure that the processor cannot be operated without the container (2) as well as the lid (3) being in position on the body (1).

## Patentansprüche

1. Küchenmaschine, umfassend einen Nahrungsmittel verarbeitenden Behälter (2), der auf dem Gehäuse (1) der Küchenmaschine angebracht ist, einen Deckel (3) für den Behälter (2), und Mittel (13) zur Befestigung des Deckels (3) an dem Behälter, wobei die Deckelbefestigungsmittel (13) ein an dem Gehäuse (1) vorgesehenes aufragendes Element (13) umfassen, über dem der Behälter (2) so angebracht ist, daß das aufragende Element (13) sich nach oben durch den Behälter (2) erstreckt, dadurch gekennzeichnet, daß der Behälter (2) lösbar an dem Gehäuse (1) angebracht ist, daß das aufragende Element (13) eine feste Achse (13) umfaßt, um die drehbar eine Antriebswelle (10) angeordnet ist, um ein Nahrungsmittel-Verarbeitungswerkzeug (4) innerhalb des Behälters drehbar anzutreiben, und daß die feste Achse (13) mit einem unterseitigen Teil (16) des Deckels (3) in Eingriff kommt, wenn der Deckel (3) auf dem Behälter angebracht wird, um so den Deckel (3) an dem Behälter (2) als auch den Behälter (2) an dem Gehäuse (1) zu befestigen.

2. Küchenmaschine nach Anspruch 1, bei der der Deckel (3) mit einem zentralen Ansatz (16) versehen ist, der von seiner Unterseite vorsteht, wobei der Ansatz (16) so angeordnet ist, daß er mit einem oberen Ende des aufragenden Elements (13) in Eingriff ist, um dadurch den Deckel (3) und somit den Behälter (2) zu befestigen.

3. Küchenmaschine nach Anspruch 1 oder 2, bei der der Behälter (2) eine rohrförmige Öffnung (7) hat, die sich von seiner Basis bis in sein Inneres erstreckt, wobei die Öffnung (7) sich über dem aufragenden Element (13) befindet, wenn der Behälter (2) auf dem Gehäuse angebracht ist.

4. Küchenmaschine nach Anspruch 2 oder 3, bei der zwei oder mehr konzentrische Antriebswellen (21, 22) vorgesehen sind, von denen jede dazu dient, ein an ihr angebrachtes Nahrungsmittel-Verarbeitungswerkzeug (4) mit einer unterschiedlichen Geschwindigkeit in Drehung zu versetzen.

5. Küchenmaschine nach einem der vorhergehenden Ansprüche, bei der eine Sicherheitsverriegelung (18, 19) vorgesehen ist, die einen Betrieb der Küchenmaschine verhindert, wenn der Deckel (3) nicht in Eingriff mit dem aufragenden Element (13) ist.

6. Küchenmaschine nach Anspruch 5, bei der das aufragende Element (13) im wesentlichen hohl ist und die Sicherheitsverriegelung (18, 19) einen Schaltmechanismus (18) umfaßt, der innerhalb des aufragenden Elements (13) angeordnet ist, wobei der Schaltmechanismus (18) durch den Vorgang des Eingriffs des Deckels (3) mit dem aufragenden Element (13) aktiviert wird.

7. Küchenmaschine nach einem der vorhergehenden Ansprüche mit einem Anschlagelement zur Sperrung der Drehung des Behälters (2) relativ zu dem Gehäuse (1) und dem Deckel (3).

8. Küchenmaschine nach einem der vorhergehenden Ansprüche mit einer zusätzlichen Sicherheitsverriegelung, um sicherzustellen, daß die Maschine nicht ohne den Behälter (2) und ohne den Deckel (3) in Position auf dem Gehäuse (1) betätigt werden kann.

## Revendications

1. Robot ménager comprenant un récipient (2) de traitement des aliments monté sur le corps (1) du robot ménager, un couvercle (3) pour le récipient (2), et des moyens (13) pour fixer le couvercle (3) sur le récipient (2), lesdits moyens (13) de fixation du couvercle comprenant un élément vertical (13) prévu sur ledit corps (1) et sur lequel est monté ledit récipient (2) de telle sorte que ledit élément vertical (13) s'étende vers le haut à travers ledit récipient (2), caractérisé en ce que ledit récipient (2) est monté de façon démontable sur ledit corps (1) ; en ce que ledit élément vertical (13) comprend un arbre fixe (13) autour duquel est disposé un arbre d'entraînement rotatif (1) permettant d'entraîner en rotation un ustensile (4) de traitement des aliments à l'intérieur du récipient ; et en ce que ledit arbre fixe (13) vient en prisé avec une partie (16) de la face inférieure dudit couvercle (3) lorsque ledit couvercle (3) est placé sur ledit récipient (2) de manière à fixer le couvercle (3) sur le récipient (2) et aussi à fixer le récipient (2) sur ledit corps (1).

2. Robot ménager selon la revendication 1, dans lequel le couvercle (3) est pourvu d'un bossage central (16) solidaire de sa face inférieure, ledit bossage (16) étant agencé de manière à se mettre en prise avec une extrémité supérieure dudit élément vertical (13) afin de fixer le couvercle (3) et ainsi le récipient (2).

3. Robot ménager selon la revendication 1 ou 2, dans lequel le récipient (2) possède une ouverture tubulaire (7) s'étendant depuis sa base jusque dans sa partie intérieure, laquelle ouverture (7) est disposée au-dessus de l'élément vertical (13) lorsque le récipient (2) est monté sur ledit corps (1).

4. Robot ménager selon la revendication 1, 2 ou 3, dans lequel deux ou plusieurs arbres d'entraînement concentriques (21, 22) sont prévus chacun pour mettre en rotation un ustensile de traitement des aliments (4) monté sur ceux-ci à une vitesse différente.

5. Robot ménager selon l'une quelconque des revendications précédentes, dans lequel est prévu un verrouillage de sécurité (18, 19) qui empêche le fonctionnement du robot ménager en l'absence de ladite prise du couvercle (3) avec l'élément vertical (13).

6. Robot ménager selon la revendication 5, dans lequel l'élément vertical (13) est sensiblement creux et le verrouillage de sécurité (18, 19) comprend un mécanisme de commutation (18) situé à l'intérieur de l'élément vertical (13), le mécanisme de commutation (18) étant actionné sous l'effet de la mise en prise du couvercle (3) avec l'élément vertical (13).

7. Robot ménager selon l'une quelconque des revendications précédentes, comprenant un élément de butée permettant d'empêcher la rotation du récipient (2) par rapport au corps (1) et au couvercle (3).

8. Robot ménager selon l'une quelconque des revendications précédentes, comprenant un verrouillage de sécurité supplémentaire destiné à garantir que le robot ne puisse être mis en marche sans que le récipient (2) ainsi que le couvercle (3) ne soient en place sur le corps (1).
